(19) Europäisches Patentamt
European Patent Office
Office européen des brevets

(11) Veröffentlichungsnummer : **0 298 916 B1**

# (12) EUROPÄISCHE PATENTSCHRIFT

(45) Veröffentlichungstag der Patentschrift : **02.10.91 Patentblatt 91/40**

(51) Int. Cl.$^5$ : **C09B 19/02,** C07D 498/04

(21) Anmeldenummer : **88810447.8**

(22) Anmeldetag : **28.06.88**

## (54) Verfahren zur Herstellung von Triphendioxazinen.

(30) Priorität : **07.07.87 CH 2579/87**

(43) Veröffentlichungstag der Anmeldung : **11.01.89 Patentblatt 89/02**

(45) Bekanntmachung des Hinweises auf die Patenterteilung : **02.10.91 Patentblatt 91/40**

(84) Benannte Vertragsstaaten : **CH DE FR GB LI**

(56) Entgegenhaltungen :
**DE-A- 3 339 923**
**DE-A- 3 510 613**
**GB-A- 1 589 915**

(73) Patentinhaber : **CIBA-GEIGY AG**
**Klybeckstrasse 141**
**CH-4002 Basel (CH)**

(72) Erfinder : **Hahn, Holger, Dr.**
**Im Gempenblick 3**
**W-7889 Grenzach-Wyhlen 1 (DE)**
Erfinder : **Blattner, Rudolf, Dr.**
**Rheinmattenweg 14**
**W-7888 Rheinfelden 4 (DE)**

**EP 0 298 916 B1**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Gegenstand der Erfindung ist ein verbessertes Verfahren zur Herstellung von Triphendioxazinverbindungen durch oxidativen Ringschluss von 2,5-Diarylamino-1,4-benzochinonverbindungen mit Oleum und gegebenenfalls weiteren Oxidationsmitteln und/oder Katalysatoren, dadurch gekennzeichnet, dass man die 2,5-Diarylamino-1,4-benzochinonverbindung und Oleum gleichzeitig in ein Reaktionsgefäss einträgt.

Triphendioxazinverbindungen sind wichtige Farbstoffe bzw. Zwischenprodukte zur Herstellung von Farbstoffen.

Es ist seit langem bekannt, dass Verbindungen dieses Typs durch Erhitzen von Diarylaminobenzochinonen der Formel

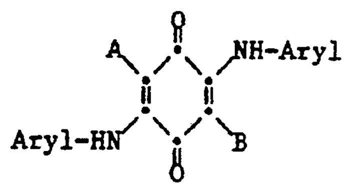

(I),

worin A und B die unten genannten Bedeutungen haben und Aryl gegebenenfalls substituiert ist, in Schwefelsäure oder Oleum mit $SO_3$ als Oxidationsmittel, gegebenenfalls unter Zusatz weiterer Oxidationsmittel in Triphendioxazine überführt werden können (siehe z.B. GB-457555, GB-1589915, CH-308489, CH-308490, DE-PS-616661, DE-AS-1024652, DE-OS-2122262, -2124080, -2302382, -2344781, -2503611, -2823828, -3423581, -3510613, EP-A-101665, EP-A-153599).

All diesen Verfahren ist gemeinsam, dass entweder das Diarylaminobenzochinon dem vorliegenden Oxidationsmittel oder umgekehrt das Oxidationsmittel einer Lösung des vorliegenden Chinons zugesetzt wird. Da bei dieser Verfahrensweise die Gefahr unerwünschter Nebenreaktionen besteht, insbesondere wenn Oleum hoher $SO_3$-Konzentration eingesetzt wird, muss relativ verdünnt, d.h. mit grossen Mengen an Schwefelsäure bzw. Oleum sehr geringer $SO_3$-Konzentration gearbeitet werden.

Es wurde nun gefunden, dass durch die simultane Zugabe von Diarylaminobenzochinonverbindungen und Oleum erstmals die Möglichkeit besteht, die exotherm ablaufende Ringschlussreaktion auch mit hochkonzentriertem Oleum durchzuführen.

Gegenstand der vorliegenden Erfindung ist somit ein Verfahren zur Herstellung von Triphendioxazinverbindungen durch oxidativen Ringschluss von 2,5-Diarylamino-1,4-benzochinonverbindungen mit Oleum und gegebenenfalls weiteren Oxidationsmitteln und/oder Katalysatoren, dadurch gekennzeichnet, dass man die 2,5-Diarylamino-1,4-benzochinonverbindungen und Oleum gleichzeitig in ein Reaktionsgefäss einträgt.

Durch diese neue Verfahrensweise kann der Verbrauch an Schwefelsäure nahezu halbiert werden und damit auch die für die Neutralisation der Schwefelsäure verwendete Menge an Base bzw. der durch die Neutralisation anfallende Salzabfall. Weitere Vorteile des erfindungsgemässen Verfahrens sind ausserdem die Möglichkeit zur kontinuierlichen Arbeitsweise, eine höhere Raum/Zeit-Ausbeute sowie ein höherer Wirkstoffgehalt im anfallenden Produkt.

In einer bevorzugten Ausführungsform wird das erfindungsgemässe Verfahren so ausgeführt, dass man

(a) in einem Reaktionsgefäss Schwefelsäure (100%) oder Oleum vorlegt,

(b) in getrennten Strömen (1) Oleum und (2) ein 2,5-Diarylamino-1,4-benzochinon gleichzeitig und kontinuierlich in das vorgelegte Oleum einträgt und vermischt, wobei die $SO_3$-Konzentration des eingetragenen Oleums grösser ist als die $SO_3$-Konzentration des vorgelegten Oleums,

(c) durch Kühlung die Reaktionsmasse in einem Bereich von 30 bis 70°C hält und

(d) die so hergestellte Triphendioxazinverbindung auf übliche Weise isoliert.

Insbesondere kann die $SO_3$-Konzentration des vorgelegten Oleums bis zu 40% betragen, während die $SO_3$-Konzentration des zugegebenen Oleums vorzugsweise 60 bis 80% beträgt.

Die im erfindungsgemässen Verfahren einsetzbaren Diarylaminobenzochinonverbindungen sind bekannt bzw. nach bekannten Methoden herstellbar (siehe die weiter oben angegebenen Literaturstellen).

Beispielsweise seien genannt Verbindungen der Formel

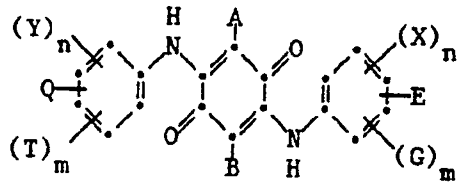

(II),

worin

A, B Wasserstoff, Halogen, gegebenenfalls substituiertes $C_1$-$C_4$-Alkyl, NH-CO-Alkyl, NH-CO-Aryl, $C_1$-$C_4$-Alkoxy, Aryl oder O-Aryl, X, Y $SO_3H$, COOH, $SO_2$-R[N(R,R)]$_p$, $SO_2$-NH-$SO_2$-R, $SO_2$-N($R_1$,$R_2$) oder CO-N($R_1$,$R_2$) sind, R gegebenenfalls substituiertes $C_1$-$C_6$-Alkyl, Aralkyl, Aryl, —CH=$CH_2$ oder —CH-$CH_2$-W ist, worin W ein unter Bildung der Gruppe —CH=$CH_2$ abspaltbarer Rest wie —$OSO_3H$ oder —$SSO_3H$ darstellt, $R_1$, $R_2$ Wasserstoff, gegebenenfalls substituiertes $C_1$-$C_6$-Alkyl, Aralkyl oder Aryl, E, Q Wasserstoff, $(L-Z)_p$-N($R_4$, $R_5$) sind, L N-$R_3$, O oder S, Z gegebenenfalls substituiertes $C_1$-$C_6$-Alkyl, Cycloalkyl, Aryl, $C_3$-$C_7$-Alkylen, Cyclohexylen oder eine Gruppe ist, worin —N($R_3$)-Z-N-($R_4$)- einen 1,4-Piperazindiyl-Ring bildet, $R_3$, $R_4$, $R_5$ Wasserstoff, gegebenenfalls substutiertes $C_1$-$C_4$-Alkyl, Cyclopentyl, Cyclohexyl oder Aryl, G, T Halogen, $C_1$-$C_4$-Alkyl, $C_1$-$C_4$-Alkoxy oder Carboxy sind, n 0 bis 4, m 0 bis 3 und p 0 oder 1 bedeutet.

Vorzugsweise bedeuten in der Formel (II) A und B Wasserstoff oder Halogen, R Methyl, Aethyl, Propyl, Phenyl, —CH=$CH_2$ oder —$CH_2$-$CH_2$-W, worin W die oben angegebene Bedeutung hat, $R_1$ und $R_2$ Wasserstoff, Methyl, Aethyl, Propyl, Phenyl, —CH=$CH_2$ oder —$CH_2$-$CH_2$-W, worin W die oben angegebene Bedeutung hat, Z $C_1$-$C_6$-Alkyl, Cycloalkyl, Aryl, $C_3$-$C_7$-Alkylen, Cyclohexylen oder eine Gruppe, worin —N($R_3$)ZN($R_4$)— einen 1,4-Piperazindiylring bildet, und $R_3$, $R_4$ und $R_5$ Wasserstoff, $C_1$-$C_4$-Alkyl, Cyclopentyl, Cyclohexyl oder Aryl.

Insbesondere werden Verbindungen der Formel

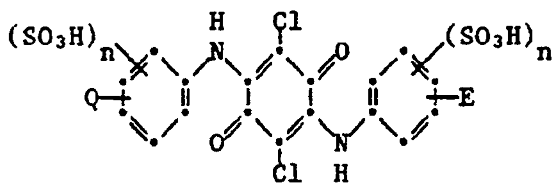

(III),

worin E, Q und n die oben angegebene Bedeutung haben, und ganz bevorzugt Verbindungen der Formel

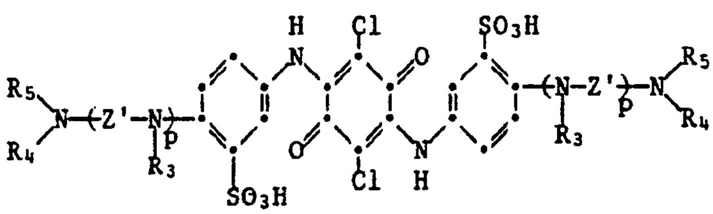

(IV),

worin Z' Phenyl, substituiertes Phenyl, $C_1$-$C_6$-Alkyl oder $C_3$-$C_7$-Cycloalkyl bedeutet und p 0 oder 1 ist und $R_3$, $R_4$ und $R_5$ Wasserstoff, gegebenenfalls substituiertes $C_1$-$C_4$-Alkyl, Cyclopentyl, Cyclohexyl oder Aryl sind.

Die Diarylaminobenzochinonverbindungen können sowohl symmetrisch als auch unsymmetrisch substituiert sein, insbesondere können während des Ringschlusses noch weitere $SO_3H$-Gruppen eingeführt werden.

Das in das Reaktionsgefäss einzutragende und als Oxidationsmittel dienende Oleum enthält freies $SO_3$ vorzugsweise in einer Konzentration von 30-80 und insbesondere 60-80%. Wird, wie in satzweisem Betrieb etwa, Oleum vorgelegt, so sollte die $SO_3$-Konzentration darin vorzugsweise bis zu 40% betragen. Es ist aber auch möglich, 100%ige Schwefelsäure als Vorlage zu verwenden.

Der Vorlage als auch dem zuzudosierenden Oleum können Katalysatoren wie Jod oder anorganische Jodverbindungen beigemischt werden.

Das Verhältnis von $SO_3$ zu Diarylaminobenzochinonverbindung der Formel (II) sollte vorzugsweise einem Verhältnis von 1 bis 5 Teilen $SO_3$, insbesondere 1 bis 3 Teilen $SO_3$, pro Teil Diarylaminobenzochinon entsprechen. Die $SO_3$-Menge kann auch teilweise durch andere Oxidationsmittel wie Natrium-, Kalium- oder Ammoniumperoxodisulfat, Braunstein, Permanganat, Arsensäure oder organische Peroxide ersetzt werden.

Die Diarylbenzochinonverbindung wird vorzugsweise in fester Form dem Reaktionsmedium zudosiert.

Nach dem erfindungsgemässen Verfahren kann sowohl nicht-kontinuierlich als auch kontinuierlich gearbeitet werden. Bei kontinuierlicher Arbeitsweise können die dafür üblichen Reaktoren wie z.B. Rohrreaktoren, Schneckenreaktoren, Knetmaschinen oder kontinuierlich arbeitende Rührkessel oder Kaskaden verwendet werden, bei denen die Reaktionsmasse stetig ausgeschleust wird.

Die gleichzeitige Zugabe von Oleum und der Diarylaminobenzochinonverbindung erfolgt vorzugsweise bei Temperaturen von 30-100°C, insbesondere 40-80°C in ein Reaktionsgfäss, welches — bei nicht-kontinuierlichem Betrieb — Reaktionsmasse aus einem früheren Ansatz enthalten kann.

In einer weiteren bevorzugten Ausführungsform des erfindungsgemässen Verfahrens wird in ein Reaktionsgefäss, das 20-40%iges Oleum enthält, gleichzeitig eine Verbindung der Formel

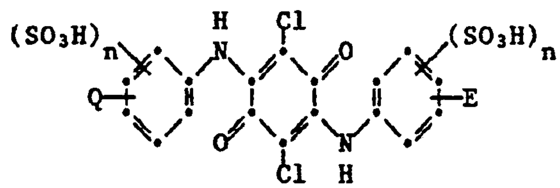

(III),

worin Q, E und n die angegebene Bedeutung haben, und 60-80%iges Oleum, in einer Menge entsprechend einem Verhältnis von 1 bis 3 Teilen $SO_3$ pro Teil der Verbindung der Formel (III) eingetragen und bei 40-80°C miteinander umsetzt.

Nach üblicher Aufarbeitung, d.h. Austragen der Reaktionsmasse auf Eis und Einstellen des pH-Wertes der so erhaltenen Mischung mit z.B. einer Natriumhydroxidlösung auf Werte von 1,2 bis 2,4, erhält man in guten Ausbeuten ein Produkt mit hohem Wirkstoffgehalt, das direkt zum Beispiel durch Umsetzung mit Cyanurderivaten zu Reaktivfarbstoffen verarbeitet werden kann.

Die nachfolgenden Beispiele veranschaulichen die Erfindung ohne sie darauf zu beschränken. Teile bedeuten Gewichtsteile und Prozente Gewichtsprozente.

Beispiel 1 : In einem Rührkessel wird ein Gemisch aus 450 Teilen Oleum 25% und 150 Teilen Oleum 66% vorgelegt und auf 30°C erwärmt. Hierzu gibt man unter Rühren während 4 Stunden gleichzeitig 275 Teile des festen Diarylaminobenzochinons der Formel

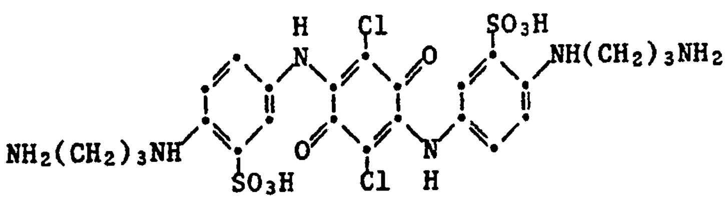

(100a)

und 675 Teile Oleum 66%. Durch Kühlung des Rührkessels wird die Temperatur während der Zugabe der Reaktanden zwischen 40-60°C gehalten. Anschliessend wird eine Stunde bei 50-60°C nachgerüht, auf 20°C abgekühlt und die Reaktionsmasse auf 3000 Teile Eis ausgetragen, mit Natriumhydroxidlösung auf pH 1,5 eingestellt und das ausgefallene Triphendioxazin abfiltriert. Der in 88%iger Ausbeute anfallende Chromophor der Formel

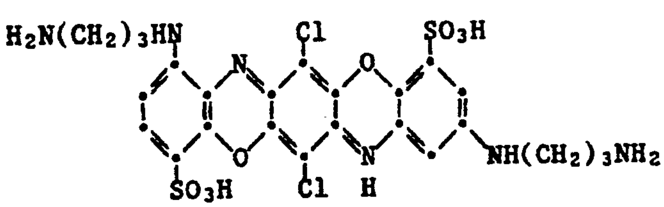

(100b)

wird direkt gemäss EP-A-101665 zu einem Farbstoff umgesetzt, der Cellulose in reinen blauen Tönen färbt.

Es fallen pro Teil Produkt 7,8 Teile Abfall (Salz + organische Nebenprodukte) an.

Wird ein Verfahren mit nicht gleichzeitiger Dosierung gemäss EP-A-101665 angewendet, so beträgt die Abfallmenge 16,5 Teile.

Beispiel 2 : In einem Rührkessel werden 600 Teile 12%iges Oleum auf 40°C vorgeheizt und während 4 Stunden 275 Teile der Verbindung der Formel

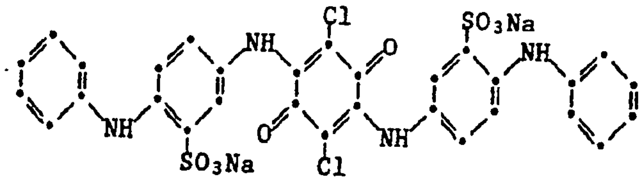

(101)

und 700 Teile 66%iges Oleum gleichmässig zudosiert. Die Temperatur wird dabei auf 50°C gehalten. Nach einstündigem Nachrühren bei gleicher Temperatur wird die Reaktionsmasse abgekühlt und auf Eiswasser gegeben, wobei die Temperatur auf 100-105°C steigt. Bei dieser Temperatur wird 2 Stunden weitergerührt, anschliessend abgekühlt, filtriert, mit NaOH auf einen pH-Wert von 1,5 eingestellt und wiederum filtriert, gewaschen und getrocknet. Man erhält 80% Direktfarbstoff, der Baumwolle und Papier in blauen Tönen färbt.

Beispiel 3 : Man verfährt analog Beispiel 1. Die Dosierung erfolgt jedoch während 4 Stunden in einem konstanten Temperaturbereich von 47°C bis 50°C oder während 10 Stunden bei konstanter Temperatur von 40°C bis 44°C. Die Ausbeute an Chromophor beträgt 87 bzw. 85%.

Beispiel 4 : Man verfährt gemäss Beispiel 1, verwendet jedoch 720 Teile Oleum 29% als Vorlage und 555 Teile Oleum 80% bei der simultanen Dosierung. Man erhält den Chromophor in einer Ausbeute von 89%.

Beispiel 5 : 550 Teile der Verbindung der Formel (100a) und 600 Teile Oleum 66% werden gleichzeitig während 2 Stunden bei 55°C bis 58°C in einen Rührkessel enthaltend 600 Teile Oleum 38% getropft. Die Weiterverarbeitung erfolgt gemäss Beispiel 1. Die Ausbeute an Chromophor beträgt 88%.

Beispiel 6 : 275 Teile der Verbindung der Formel (100a) werden gleichzeitig mit 675 Teilen Oleum 66% in ein Gemisch aus 450 Teilen Oleum 25% und 150 Teilen Oleum 66% unter isothermer Temperaturführung bei 44°C während 4 Stunden dosiert. Die Reaktionsmasse wird dabei ständig kreislaufartig durch einen Wärmeaustauscher gepumpt. Anschliessend wird die Reaktionsmasse noch 2 Stunden auf 50°C gehalten und, wie in Beispiel 1 beschrieben, aufgearbeitet. Die Ausbeute an Chromophor beträgt 90%.

Beispiel 7 : In einem 1 l Durchlaufrührkessel mit 600 Teilen unter Beispiel 1 hergestellter Endreaktionsmasse werden bei einer Innentemperatur von 50°C kontinuierlich 6 Teile/min des Chloranil-Kondensationsprodukts der Formel (100a) und 24 Teile/min Oleum 66% über Niveau eingetragen. Gleichzeitig werden über den Bodenauslauf 30 Teile/min der Reaktionsmasse abgezogen und in einen zweiten Durchlaufrührkessel mit 600 Teilen Endreaktionsmasse bei 60°C zufliessen gelassen. Der kontinuierliche Austrag von 30 Teilen/min aus dem zweiten Reaktionsgefäss kann batchweise oder ebenfalls kontinuierlich durch Verdünnen mit Eiswasser und anschliessender Neutralisation analog Beispiel 1 aufgearbeitet werden. Die mittlere Verweilzeit in jedem Reaktor beträgt 20 Minuten. Nach etwa 2 Stunden Laufzeit wird ein stationärer Betrieb der Kesselkaskade erreicht. Die Ausbeute an Chromophor beträgt 90%.

**Patentansprüche**

1. Verfahren zur Herstellung von Triphendioxazinverbindungen durch oxidativen Ringschluss von 2,5-Diarylamino-1,4-benzochinonverbindungen mit Oleum und gegebenenfalls weiteren Oxidationsmitteln und/oder Katalysatoren, dadurch gekennzeichnet, dass man die 2,5-Diarylamino-1,4-benzochinonverbindungen und Oleum gleichzeitig in ein Reaktionsgefäss einträgt.

2. Verfahren nach Anspruch 1, dadurch gekennzeichnet, dass man

(a) in einem Reaktionsgefäss Schwefelsäure (100%) oder Oleum vorlegt,

(b) in getrennten Strömen (1) Oleum und (2) ein 2,5-Diarylamino-1,4-benzochinon gleichzeitig und kontinuierlich in das vorgelegte Oleum einträgt und vermischt, wobei die $SO_3$-Konzentration des eingetragenen Oleums grösser ist als die $SO_3$-Konzentration des vorgelegten Oleums,

(c) durch Kühlung die Reaktionsmasse in einem Bereich von 30 bis 70°C hält und

(d) die so hergestellte Triphendioxazinverbindung auf übliche Weise isoliert.

3. Verfahren nach Anspruch 2, dadurch gekennzeichnet, dass die $SO_3$-Konzentration des vorgelegten Oleums bis zu 40%, die $SO_3$-Konzentration des zugegebenen Oleums 60 bis 80% beträgt.

4. Verfahren gemäss Anspruch 1, dadurch gekennzeichnet, dass man 2,5-Diarylamino-1,4-benzochinonverbindungen der Formel

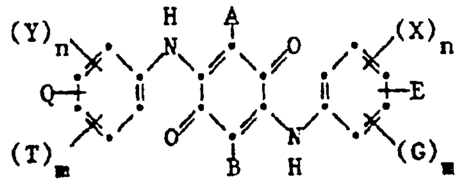 (II),

verwendet, worin

A, B Wasserstoff, Halogen, gegebenenfalls substituiertes $C_1$-$C_4$-Alkyl, NH-CO-Alkyl, NH-CO-Aryl, $C_1$-$C_4$-Alkoxy, Aryl oder O-Aryl, X, Y $SO_3H$, COOH, $SO_2$-R[N(R,R)]$_p$, $SO_2$-NH-$SO_2$-R, $SO_2$-N($R_1$,$R_2$) oder CO-N($R_1$,$R_2$) sind, R gegebenenfalls substituiertes $C_1$-$C_6$-Alkyl, Aralkyl, Aryl, —CH=$CH_2$ oder —CH-$CH_2$-W ist, worin W ein unter Bildung der Gruppe —CH=$CH_2$ abspaltbarer Rest wie —$OSO_3H$ oder —$SSO_3H$ darstellt, $R_1$, $R_2$ Wasserstoff, gegebenenfalls substituiertes $C_1$-$C_6$-Alkyl, Aralkyl oder Aryl, E, Q Wasserstoff, $(L\text{-}Z)_p$-N($R_4$, $R_5$) sind, L N-$R_3$, O oder S, Z gegebenenfalls substituiertes $C_1$-$C_6$-Alkyl, Cycloalkyl, Aryl, $C_3$-$C_7$-Alkylen, Cyclohexylen oder eine Gruppe ist, worin —N($R_3$)-Z-N($R_4$)— einen 1,4-Piperazindiyl-Ring bildet, $R_3$, $R_4$, $R_5$ Wasserstoff, gegebenenfalls substutiertes $C_1$-$C_4$-Alkyl, Cyclopentyl, Cyclohexyl oder Aryl, G, T Halogen, $C_1$-$C_4$-Alkyl, $C_1$-$C_4$-Alkoxy oder Carboxy sind, n 0 bis 4, m 0 bis 3 und p 0 oder 1 bedeutet.

5. Verfahren gemäss Anspruch 4, dadurch gekennzeichnet, dass man 2,5-Diarylamino-1,4-benzochinonverbindungen der Formel (II) verwendet, worin A und B Wasserstoff oder Halogen sind, R Methyl, Aethyl, Propyl, Phenyl, —CH=$CH_2$ oder —$CH_2$-$CH_2$-W ist, worin W die in Anspruch 4 angegebene Bedeutung hat, $R_1$ und $R_2$ Wasserstoff, Methyl, Aethyl, Propyl, Phenyl, —CH=$CH_2$ oder —$CH_2$-$CH_2$-W sind, worin W die angegebene Bedeutung hat, Z $C_1$-$C_6$-Alkyl oder Cycloalkyl, Aryl, $C_3$-$C_7$-Alkylen, Cyclohexylen oder eine Gruppe ist, worin —N($R_3$)ZN($R_4$)— einen 1,4-Piperazindiylring bildet, und $R_3$, $R_4$ und $R_5$ Wasserstoff, $C_1$-$C_4$-Alkyl, Cyclopentyl, Cyclohexyl oder Aryl sind.

6. Verfahren gemäss Anspruch 1, dadurch gekennzeichnet, dass die Reaktionstemperatur während der Zugabe 30-100°C beträgt.

7. Verfahren gemäss Anspruch 6, dadurch gekennzeichnet, dass die Reaktionstemperatur 40-80°C beträgt.

8. Verfahren gemäss Anspruch 1, dadurch gekennzeichnet, dass man mit 30-80%igem Oleum arbeitet.

9. Verfahren gemäss Anspruch 8, dadurch gekennzeichnet, dass man mit 60-80%igem Oleum arbeitet.

10. Verfahren gemäss Anspruch 8, dadurch gekennzeichnet, dass man 1 bis 5 Teile $SO_3$ pro Teil 2,5-Diarylamino-1,4-benzochinonverbindung der Formel (II) verwendet.

11. Verfahren gemäss Anspruch 8, dadurch gekennzeichnet, dass man 1 bis 3 Teile $SO_3$ pro Teil 2,5-Diarylamino-1,4-benzochinonverbindung der Formel (II) verwendet.

12. Verfahren gemäss Anspruch 1, dadurch gekennzeichnet, dass man in ein Reaktionsgefäss, das Oleum mit einer $SO_3$-Konzentration von 20-40% enthält, eine Verbindung der Formel

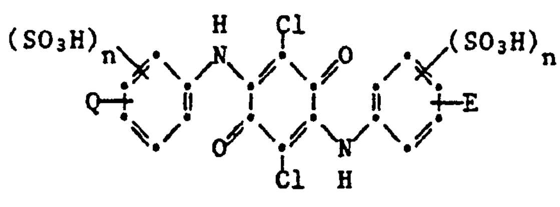 (III), .

worin E, Q und n die in Anspruch 5 angegebene bedeutung haben, gleichzeitig mit 60-80%igem Oleum, in einer Menge entsprechend einem Verhältnis von 1 bis 3 Teilen $SO_3$ pro Teil der Verbindung der Formel (III) einträgt, und bei 40-80°C miteinander reagieren lässt.

## Claims

1. A process for the preparation of a triphendioxazine compound by oxidative cyclisation of a 2,5-diarylamino-1,4-benzoquinone compound with oleum and optionally with further oxidising agents and/or catalysts, which comprises introducing the 2,5-diarylamino-1,4-benzoquinone compound and oleum simultaneously into a reaction vessel.

2. A process according to claim 1, which comprises

(a) initially charging a reaction vessel with sulfuric acid (100%) or oleum,
(b) introducing (1) oleum and (2) a 2,5-diarylamino-1,4-benzoquinone in separate streams, simultaneously and continuously, into the initial oleum charge and mixing the components, the oleum introduced having a higher concentration of $SO_3$ than the initial oleum charge,
(c) keeping the reaction mass in a range from 30 to 70°C by cooling, and
(d) isolating the triphendioxazine compound thus prepared in a conventional manner.

3. A process according to claim 2, wherein the $SO_3$ concentration of the initial oleum charge is up to 40% and the $SO_3$ concentration of the oleum added is from 60 to 80%.

4. A process according to claim 1, wherein a 2,5-diarylamino-1,4-benzoquinone compound of formula

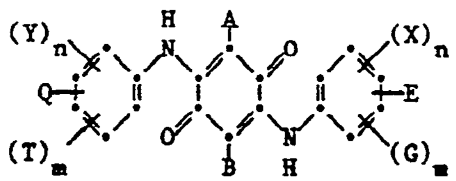

(II),

is used, in which A and B are hydrogen, halogen, unsubstituted or substituted $C_1$-$C_4$alkyl, NH-CO-alkyl, NH-CO-aryl, $C_1$-$C_4$alkoxy, aryl or O-aryl, X and Y are $SO_3H$, COOH, $SO_2$-R[N(R,R)]$_p$, $SO_2$-NH-$SO_2$-R, $SO_2$-N($R_1$,$R_2$) or CO-N($R_1$,$R_2$), R is unsubstituted or substituted $C_1$-$C_6$alkyl, aralkyl, aryl, —CH=$CH_2$ or —CH-$CH_2$-W, where W is a radical which can be detached to form the —CH=$CH_2$ group, such as —$OSO_3H$ or —$SSO_3H$, $R_1$ and $R_2$ are hydrogen, unsubstituted or substituted $C_1$-$C_6$alkyl, aralkyl or aryl, E and Q are hydrogen, $\{L\text{-}Z\}_p$-N($R_4$,$R_5$), in which L is N-$R_3$, O or S and Z is unsubstituted or substituted $C_1$-$C_6$alkyl, cycloalkyl, aryl, $C_3$-$C_7$alkylene, cyclohexylene, or a group in which —N($R_3$)-Z-N($R_4$)— forms a 1,4-piperazinediyl ring, $R_3$, $R_4$ and $R_5$ are hydrogen, unsubstituted or substituted $C_1$-$C_4$alkyl, cyclopentyl, cyclohexyl or aryl, G and T are halogen, $C_1$-$C_4$alkyl, $C_1$-$C_4$alkoxy or carboxyl, n is 0 to 4, m is 0 to 3, and p is 0 or 1.

5. A process according to claim 4, wherein a 2,5-diarylamino-1,4-benzoquinone compound of formula (II) is used, in which A and B are hydrogen or halogen, R is methyl, ethyl, propyl, phenyl, —CH=$CH_2$ or —$CH_2$-$CH_2$-W, in which W is as defined in claim 4, $R_1$ and $R_2$ are hydrogen, methyl, ethyl, propyl, phenyl, —CH=$CH_2$ or —$CH_2$-$CH_2$-W in which W has the given meaning, Z is $C_1$-$C_6$alkyl or cycloalkyl, aryl, $C_3$-$C_7$alkylene, cyclohexylene or a group in which —N($R_3$)ZN($R_4$)— forms a 1,4-piperazinediyl ring, and $R_3$, $R_4$ and $R_5$ are hydrogen, $C_1$-$C_4$alkyl, cyclopentyl, cyclohexyl, or aryl.

6. A process according to claim 1, wherein the reaction temperature during the addition is from 30 to 100°C.

7. A process according to claim 6, wherein the reaction temperature is from 40 to 80°C.

8. A process according to claim 1, wherein 30 to 80% oleum is used.

9. A process according to claim 8, wherein 60 to 80% oleum is used.

10. A process according to claim 8, wherein 1 to 5 parts of $SO_3$ are used per part of 2,5-diarylamino-1,4-benzoquinone compound of formula (II).

11. A process according to claim 8, wherein 1 to 3 parts of $SO_3$ are used per part of 2,5-diarylamino-1,4-benzoquinone compound of formula (II).

12. A process according to claim 1, which comprises introducing a compound of formula

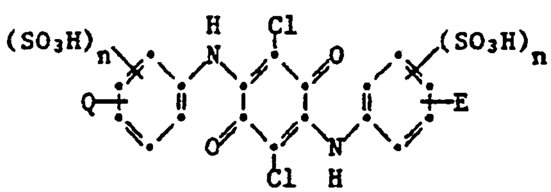

(III),

in which E, Q and n are as defined in claim 5 simultaneously with 60 to 80% oleum in an amount corresponding to a ratio of 1 to 3 parts of $SO_3$ per part of compound of formula (III) into a reaction vessel which contains oleum having an $SO_3$ concentration of 20-40%, and reacting the components together at from 40 to 80°C.

## Revendications

1. Procédé pour la préparation de composés de type triphénodioxazine par cyclisation oxydante de 2,5-diarylamino-1,4-benzoquinones à l'aide d'oléum et éventuellement d'autres oxydants et/ou de catalyseurs, caractérisé en ce que l'on introduit simultanément les 2,5-diarylamino-1,4-benzoquinones et l'oléum dans un récipient de réaction.

2. Procédé selon la revendication 1, caractérisé en ce que

(a) on dispose au préalable de l'acide sulfurique (à 100%) ou un oléum dans un récipient de réaction,

(b) on introduit et mélange simultanément et en continu dans l'oléum disposé au préalable, en courants séparés, (1) de l'oléum et (2) une 2,5-diarylamino-1,4-benzoquinone, la teneur en $SO_3$ de l'oléum introduit étant supérieure à la teneur en $SO_3$ de l'oléum disposé au préalable,

(c) on maintient par refroidissement la masse réactionnelle dans une plage de 30 à 70°C, et

(d) on isole à la manière usuelle le composé de type triphénodioxazine ainsi obtenu.

3. Procédé selon la revendication 2, caractérisé en ce que la teneur en $SO_3$ de l'oléum disposé au préalable vaut jusqu'à 40%, la teneur en $SO_3$ de l'oléum ajouté vaut de 60 à 80%.

4. Procédé selon la revendication 1, caractérisé en ce que l'on utilise des composés 2,5-diarylamino-1,4-benzoquinone de formule

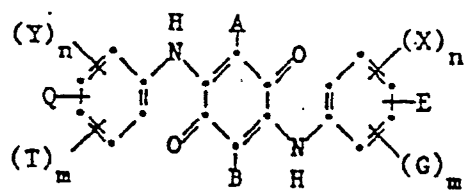 (II),

dans laquelle

A, B représentent un atome d'hydrogène ou d'halogène ou un radical alkyle en $C_1$-$C_4$, NH-CO-alkyle, NH-CO-aryle, alcoxy en $C_1$-$C_4$, aryle ou O-aryle, éventuellement substitué ; X, Y sont $SO_3H$, COOH, $SO_2$-R-$[N(R,R)]_p$, $SO_2$-NH-$SO_2$-R, $SO_2$-N($R_1$,$R_2$) ou CO-N($R_1$,$R_2$) ; R est un radical alkyle en $C_1$-$C_6$, aralkyle, aryle, éventuellement substitué, —CH=$CH_2$ ou —$CH_2$-$CH_2$-W, W représentant un reste séparable avec formation du groupe —CH=$CH_2$, tel que —$OSO_3H$ ou —$SSO_3H$ ; $R_1$, $R_2$ représentent un atome d'hydrogène ou un radical alkyle en $C_1$-$C_6$, aralkyle ou aryle, éventuellement substitué ; E, Q représentent un atome d'hydrogène ou —$(L-Z)_p$-N($R_4$,$R_5$), L étant N-$R_3$, O ou S, Z étant un radical alkyle en $C_1$-$C_6$, cycloalkyle, aryle, alkylène en $C_3$-$C_7$, cyclohexylène, éventuellement substitué, ou un groupe tel que —N($R_3$)-Z-N($R_4$)— forme un cycle 1,4-pipérazinediyle ; $R_3$, $R_4$, $R_5$ représentent un atome d'hydrogène ou un radical alkyle en $C_1$-$C_4$, cyclopentyle, cyclohexyle ou aryle, éventuellement substitué ; G, T représentent un atome d'halogène ou un radical alkyle en $C_1$-$C_4$, alcoxy en $C_1$-$C_4$ ou carboxy ; n vaut de 0 à 4 ; m vaut de 0 à 3 et p vaut 0 ou 1.

5. Procédé selon la revendication 4, caractérisé en ce que l'on utilise des 2,5-diarylamino-1,4-benzoquinones de formule (II) dans lesquelles A et B sont des atomes d'hydrogène ou d'halogène, R est le radical méthyle, éthyle, propyle, phényle, —CH=$CH_2$ ou —$CH_2$-$CH_2$-W, W ayant la signification donnée dans la revendication 4, $R_1$ et $R_2$ représentent un atome d'hydrogène ou le radical méthyle, éthyle, propyle, phényle, —CH=$CH_2$ ou —$CH_2$-$CH_2$-W, W ayant la signification indiquée, Z est un radical alkyle en $C_1$-$C_6$ ou cycloalkyle, aryle, alkylène en $C_3$-$C_7$, cyclohexylène ou un groupe tel que —N($R_3$)ZN($R_4$)— forme un cycle 1,4-pipérazinediyle, et $R_3$, $R_4$ et $R_5$ représentent un atome d'hydrogène ou un radical alkyle en $C_1$-$C_4$, cyclopentyle, cyclohexyle ou aryle.

6. Procédé selon la revendication 1, caractérisé en ce que, pendant l'addition, la température de la réaction est de 30-100°C.

7. Procédé selon la revendication 6, caractérisé en ce que la température de la réaction est de 40-80°C.

8. Procédé selon la revendication 1, caractérisé en ce que l'on opère avec de l'oléum à 30-80%.

9. Procédé selon la revendication 8, caractérisé en ce que l'on opère avec de l'oléum à 60-80%.

10. Procédé selon la revendication 8, caractérisé en ce que l'on utilise de 1 à 5 parties de $SO_3$ par partie de 2,5-diarylamino-1,4-benzoquinone de formule (II).

11. Procédé selon la revendication 8, caractérisé en ce que l'on utilise de 1 à 3 parties de $SO_3$ par partie de 2,5-diarylamino-1,4-benzoquinone de formule (II).

12. Procédé selon la revendication 1, caractérisé en ce que l'on introduit simultanément dans un récipient de réaction, qui contient de l'oléum ayant une teneur en $SO_3$ de 20-40%, un composé de formule

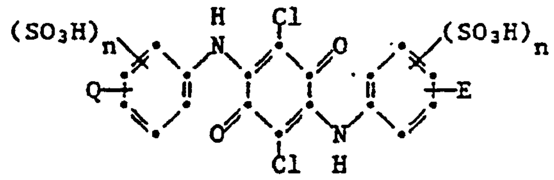

(III)

dans laquelle E, Q et n'ont les significations données dans la revendication 5, avec de l'oléum à 60-80%, en une quantité correspondant à un rapport de 1 à 3 parties de $SO_3$ par partie du composé de formule (III), et on les fait réagir l'un avec l'autre à 40-80°C.